# EUROPEAN PATENT SPECIFICATION

(11) **EP 3 792 023 B1**
(45) Date of publication and mention of the grant of the patent: **01.10.2025**
(21) Application number: 20191869.5
(22) Date of filing: 20.08.2020
(51) Int. Cl.: B27B 27/02, B27B 27/10

(54) **SAW AND METHOD OF USING THE SAW**
SÄGE UND VERFAHREN ZUR VERWENDUNG DER SÄGE
SCIE ET PROCÉDÉ D'UTILISATION DE LA SCIE

(30) Priority: 16.09.2019 GB 201913317
(43) Date of publication of application: 17.03.2021
(73) Proprietor: Black & Decker Inc., New Britain, CT 06053 (US)
(72) Inventor: SPINELLI, Pierluigi, 06126 Perugia (IT)
(74) Representative: SBD IPAdmin

(56) References cited:
- US-A- 5 768 966
- US-A1- 2015 082 962

## Description

The present invention relates to a saw as per the preamble of appended claim 1 and to a method of using such a saw.

Chop saws comprise a motor unit pivotally mounted on a base. The motor unit is located above the base and can pivot between a high position where it is located further most away from the base to a low position where a circular saw blade, which is mounted on the motor unit and which is capable of being rotationally driven by a motor located within the motor unit, can engage with a work piece located on the base. A spring biases the motor unit to its upper most position.

Furthermore, these types of saw include mechanisms by which they are able to perform mitre and bevel cuts on work pieces located on the base.

Sliding compound mitre saws have an additional sliding feature wherein the motor unit, in addition to be able to perform a pivotal or chopping movement, can slide linearly across the base to perform a slide cut.

These type of saw comprise a fence which traverses the base. During the operation of the saw, a work piece is placed against the fence to maintain its position whilst it is being cut.

These types of saw comprise guards which surround the edge of the saw blade in order to prevent the operator from touching the cutting edge. Typically, such saws comprise a fixed guard which surrounds the cutting edge of the top half of the cutting blade and a pivotal guard which is capable of surrounding the cutting edge of the lower half of the cutting blade. The pivotal guard is capable of being pivoted from a first position where it surrounds the cutting edge of the lower half of the cutting blade to a retracted position where the cutting edge of the lower half of the cutting blade is exposed so that the cutting blade can be used to cut a work piece. The purpose of the pivotal guard is to enable the cutting edge of the lower half of the circular saw blade to be surrounded when the saw blade is not being used to provide protection to the operator whilst allowing the cutting edge of the lower half of the circular saw blade to be exposed when it is required to perform the cutting function.

EP1772221 describes one example of a design of a sliding compound mitre saw.

Referring to Figure 1, the saw described in EP177221 comprises a base 2 in which is mounted a circular table 4. The circular table 4 can rotate about a vertical axis. An arm 6 is attached to the front of the circular table 4 which extends through a recess 8 formed in the front of the base 2 and then forward of the base 2. As the circular table rotates, the arm 6 swings within the recess 8, the maximum amount of pivotal movement being limited by the sides 10 of the recess 8. A latch 12 is attached to the underside of the end of the arm 6 which is capable of releasably locking the angular position of the arm 6 within the recess 8. A fence 14 is rigidly attached to the base 2 and passes over the circular table 4.

Pivotally attached to the rear of the circular table 4 is a bevel support 16. The bevel support 16 can pivot about a horizontal bevel axis 18. The bevel support 16 can be locked in a range of angular positions relative to the circular table 4 using a locking handle 20.

Pivotally mounted onto the bevel support 16 is a slide support 22. The slide support 22 can pivot about a chopping axis 24 which is parallel to the axis of rotation 26 of a cutting blade 28.

Rigidly mounted within the slide support 22 are the ends of two straight rods 30; 32. The rods 30; 32 are prevented from sliding or rotating within the slide support 22. The rods 30, 32 are located one above the other and are parallel to each other. Attached to the end 34 of the top rod 30 is a spring 36. The other end of the spring 36 is attached to the bevel support 16. The spring 36 is under tension, biasing the end 34 of the top rod 30 downwardly, biasing the ends of the two rods 30, 32 located remotely from the slide support 22 upwardly due to the pivotal connection of the slide support 22 to the bevel support 16.

Slideably mounted onto the two rods 30, 32 is a saw assembly 38.

The saw assembly 38 comprises a motor housing 40 in which is mounted an electric motor. The electric motor is powered via an electric cable 42. Mounted on the front of the motor housing 40 is a handle 44. A trigger switch 46 is mounted within the handle 44, which when depressed, activates the motor. A drive spindle 48 projects from the housing 40. A circular saw blade 28 is rigidly mounted onto the drive spindle 48. When the motor, is activated, the drive spindle rotates, rotatingly driving the saw blade 28. A fixed guard 52 is rigidly mounted onto the motor housing 40 and surrounds the top cutting edge of the saw blade 28. A pivotal guard 54 is pivotally mounted on the motor housing 40 and can pivot about the axis of rotation 26 of the saw blade 28. The pivotal guard 54 can pivot between an enclosed position where it surrounds the lower cutting edge of the saw blade 28 and a retracted position where it exposes the lower cutting edge of the saw blade 28. When the pivotal guard is in the retracted position, it is telescopically pivoted into the fixed guard 52. A pivotal guard spring biases the pivotal guard 54 to the enclosed position.

The saw assembly 38 can slide along the two rods 30, 32 towards or away from the slide support 22.

In use, a work piece is placed on the base 2 and circular table 4 against the fence 14. The pivotal movement of the circular table 4 about the vertical axis allows the saw to perform mitre cuts on the work piece. The pivotal movement of the bevel support 16 in relation to the circular table 4 about the bevel axis 18 allows the saw to perform bevel cuts on the work piece. The pivotal movement of the slide support 22 on the bevel support 16 about the chopping axis 24 allows the saw to perform chop cuts on the work piece. The sliding movement of the saw assembly 38 along the two rods 30, 32 allows the saw to perform sliding cuts on the work piece.

The saw comprises a pivotal guard actuating mechanism. The pivotal guard actuating mechanism causes the pivotal guard to pivot to its retracted position when the saw assembly is pivoted about the chopping axis 24 from its upper position to its lower position. The spring 36 biases the saw assembly 38 to pivot about the chopping axis 24 to its upper most position. In this position, the pivotal guard 54 encloses the lower edge of the cutting blade 28. As the saw assembly is pivoted downwardly towards the circular table 4, the pivotal guard actuating mechanism causes the guard 54 to retract into the fixed guard 52, exposing the lower cutting edge of the blade 28.

Often in these types of saw, the fence comprises a stationary fence mounted on the base with a moveable fence mounted on a base or a stationary fence (with their support surfaces for the work piece being aligned). The position of the stationary fence remains fixed. The moveable fence typically slides along the top of the base or the stationary fence, in a lengthwise direction, towards or away from the blade (when it is in its lowest position) so that its position can be adjusted relative to the blade.

US5297463 discloses a compound mitre saw with a table top which has a sliding fence 24 mounted on a fixed fence 26. EP1813400 discloses a sliding compound mitre saw with a table top which has a sliding fence 620 mounted on a fixed fence 608.

US2015082962 discloses a saw having all of the features in the precharacterising portion of claim 1.

US5768966 discloses a fence for a wood working machine having a moveable stop mounted on it.

Accordingly, there is provided a saw in accordance with claim 1.

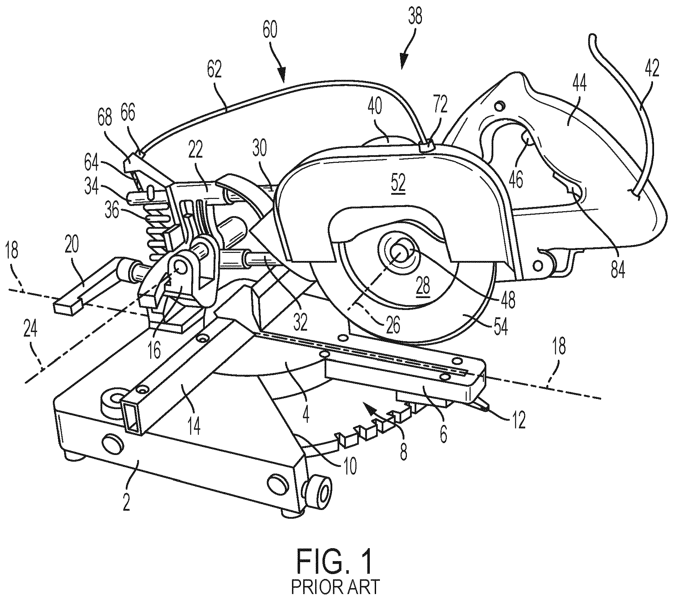

An embodiment of the invention will now be described with reference to the accompanying drawings of which:-
Figure 1 shows a perspective view of a prior art design of saw as disclosed in EP1772221;
Figure 2 shows a front view of the sliding fence with the flip down stop in its first forward position;
Figure 3 shows a front perspective view of the sliding fence with the flip down stop in its first forward position;
Figure 4 shows a front perspective view of the sliding fence with the flip down stop in its second rearward position;
Figure 5 shows a side view of the sliding fence with the flip down stop in its second rearward position;
Figure 6 shows a second front perspective view of the sliding fence with the flip down stop in its first forward position and the fence moved to an inward position;
Figure 7 shows a side view of the sliding fence with the flip down stop in its first forward position;
Figure 8 shows a side view of the lock knob and retaining clip for the sliding fence;
Figure 9 shows a perspective view of the lock knob and retaining clip mounted on the fence base;
Figure 10 shows a horizontal cross-sectional view of the lock knob and retaining clip mounted on the fence base;
Figure 11 shows a vertical cross-sectional view of the lock knob and retaining clip mounted on the fence base;
Figure 12 shows a rubber ring;
Figure 13 shows a wrench mounted in the rubber ring on the base;
Figure 14 is sketch of a workpiece located on the base of the saw with it abutted up against the fence plate with the flip down stop located in its first position.
A flip down stop for saw will now be described with reference to Figures 2 to 7. The construction of saw in is similar to that described in EP177221.
The saw is a sliding compound mitre saw and comprises a base 102 in which is mounted a circular table 104. The circular table 104 can rotate about a vertical axis. An arm 106 is attached to the front of the circular table 104 which extends through a recess 108 formed in the front of the base 102 and then forward of the base 102. As the circular table 104 rotates, the arm 106 swings within the recess 108, the maximum amount of pivotal movement being limited by the sides 110 of the recess 108. A latch (not shown) is attached to the underside of the end of the arm which is capable of releasably locking the angular position of the arm within the recess 108. A fence assembly 114 is rigidly attached to the base 102 and passes over the circular table 104.

Pivotally attached to the rear of the circular table 104 is a bevel support 116. The bevel support 116 can pivot about a horizontal bevel axis. The bevel support 116 can be locked in a range of angular positions relative to the circular table 104 using a locking handle 120.

Pivotally mounted onto the bevel support 116 is a slide support (not shown). The slide support can pivot about a chopping axis which is parallel to the axis of rotation of a cutting blade 128.

Rigidly mounted within the slide support (not shown) are the ends of two straight rods (not shown). The rods are prevented from sliding or rotating within the slide support. The rods are located one above the other and are parallel to each other. Attached to the end of the top rod is a spring (not shown). The other end of the spring is attached to the bevel support. The spring is under tension, biasing the end of the top rod downwardly, biasing the ends of the two rods located remotely from the slide support upwardly due to the pivotal connection of the slide support to the bevel support 116.

Slideably mounted onto the two rods is a saw assembly 138.

The saw assembly 138 comprises a motor housing in which is mounted an electric motor. The electric motor is powered via an electric cable. Mounted on the front of the motor housing is a handle (not shown). A trigger switch (not shown) is mounted within the handle, which when depressed, activates the motor. A drive spindle projects from the housing. The circular saw blade 128 is rigidly mounted onto the drive spindle. When the motor, is activated, the drive spindle rotates, rotatingly driving the saw blade 128. A fixed guard 152 is rigidly mounted onto the motor housing and surrounds the top cutting edge of the saw blade 128. A pivotal guard 154 is pivotally mounted on the motor housing and can pivot about the axis of rotation of the saw blade 128. The pivotal guard 154 can pivot between an enclosed position where it surrounds the lower cutting edge of the saw blade 128 and a retracted position where it exposes the lower cutting edge of the saw blade 128. When the pivotal guard is in the retracted position, it is telescopically pivoted into the fixed guard 152. A pivotal guard spring biases the pivotal guard 154 to the enclosed position.

The saw assembly 138 can slide along the two rods towards or away from the slide support.

In use, a work piece is placed on the base 102 and circular table 104 against the fence assembly 114. The pivotal movement of the circular table 104 about the vertical axis allows the saw to perform mitre cuts on the work piece. The pivotal movement of the bevel support 116 in relation to the circular table 104 about the bevel axis allows the saw to perform bevel cuts on the work piece. The pivotal movement of the slide support on the bevel support 116 about the chopping axis allows the saw to perform chop cuts on the work piece. The sliding movement of the saw assembly 138 along the two rods allows the saw to perform sliding cuts on the work piece.

The saw comprises a pivotal guard actuating mechanism. The pivotal guard actuating mechanism causes the pivotal guard to pivot to its retracted position when the saw assembly is pivoted about the chopping axis from its upper position to its lower position. The spring biases the saw assembly 138 to pivot about the chopping axis to its upper most position. In this position, the pivotal guard 154 encloses the lower edge of the cutting blade 128. As the saw assembly is pivoted downwardly towards the circular table 104, the pivotal guard actuating mechanism causes the guard 154 to retract into the fixed guard 152, exposing the lower cutting edge of the blade 128.

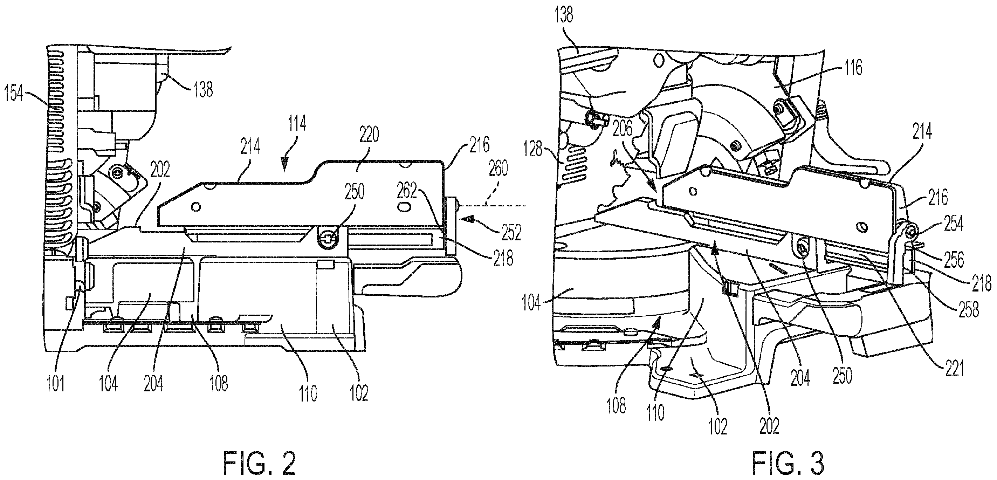

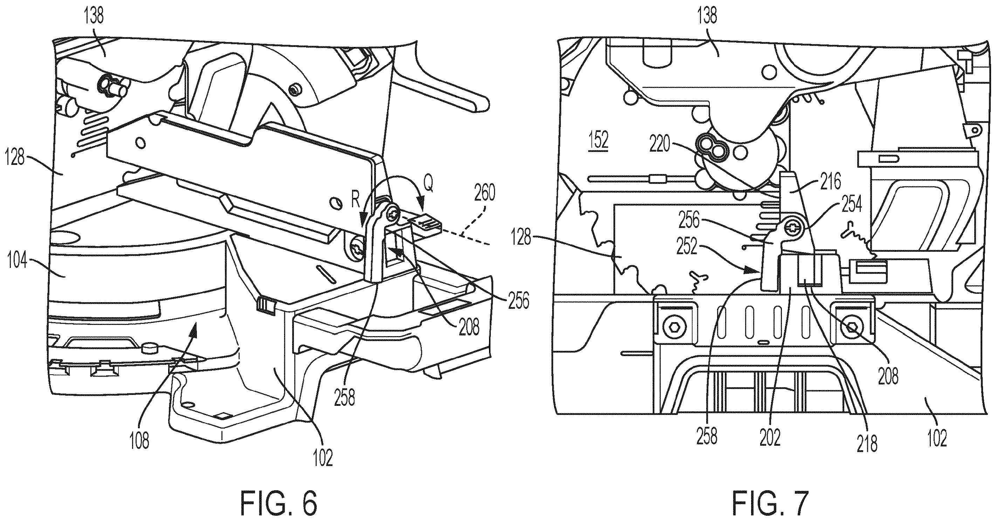

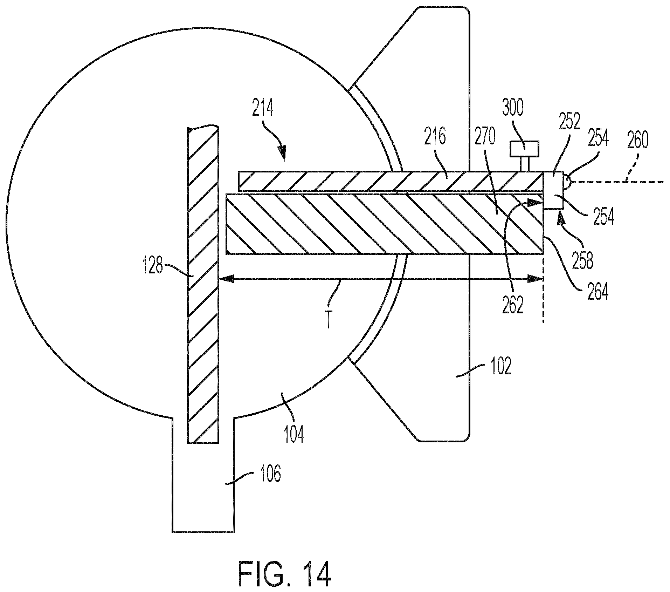

The fence assembly 114 and flip down stop 252 will now be described with reference to Figures 2 to 7 and Figures 14 to 17.
The fence assembly 114 comprises two sliding fences connected to each other by a semi-circular connecting part in well know manner. Each sliding fence is the same design as the other but in a mirror image. One sliding fence is mounted on one side of the blade 128, the other is mounted on the other side in a mirror image, with the semi-circular connecting part wrapping around the rear of the blade 128. Only one sliding fence is shown in Figures 2 to 7.

Each sliding fence 114 comprises a fence base 202 which is attached to the base 102 of the saw at one end and to the semi circular connecting part at the other. The bases 202 of the two sliding fences and semi-circular connecting part are manufactures from metal in a one-piece construction.

The fence base 202 comprises a vertical flat support surface 204 formed on a front surface. The fence base 202 acts as a fixed fence, the work piece being cut being placed against the flat vertical support surface 204 of the fence base 202.

Formed in the top of fence base 202 in a lengthwise direction is a groove 206 having a uniform rectangular cross sectional shape along its length. The end 208 of the groove 206 is open at the end of the fence base 202. A threaded hole 210 is formed in the fence base 202 through the rearward side wall 212 of the groove 206 into which a shaft 304 of a lock knob 300 can be inserted. A detailed description of the stop knob 300 is provided below. A second threaded hole is formed through the front side wall 213 of the groove 206 into which a shaft of a bolt 250 can be inserted.

Mounted on the fence base 202 is a fence plate 214. The fence plate 214 can slide along the groove 206 of the fence base 202 in a longitudinal direction. The fence plate 214 is attached to the fence base 202 using a plastic lanyard 290. One end of the lanyard 290 is attached to the fence plate 214 using bolt 292. The other end of the lanyard is attached to the fence base 202 using a second bolt (not shown). The length of the lanyard 290 is such that it does not interfere with the sliding movement of the fence plate 214 on the fence base 202.

The fence plate 214 comprises an upper wall section 216 and a lower groove engagement section 218.

The upper wall section 216 comprises a flat support surface 220 formed on a front surface which, when the fence plate 214 is mounted on the fence base 202, aligns with and is parallel to the vertical flat support surface 204 of the fence base 202. The upper wall section 216 acts as a moveable fence, the flat support surface 220 co-operating with the vertical support surface 204 of the fence base 102, the work piece being cut being placed against the flat support surfaces 204, 220 of the upper wall section 216 and the fence base 202.

The lower groove engagement section 218 comprises an elongate ridge which has a rectangular cross sectional shape which is uniform along its length and which corresponds to that of the groove 206. When the fence plate 214 is mounted on the fence base 202, the lower groove engagement section 218 locates within the groove 206 of the fence base 202. Formed along the front side of the lower groove engagement section 218 is an elongate recess 221 which extends along the front side of the lower groove engagement section in a lengthwise direction. The elongate recess 221 faces the exit of the second threaded hole so that, when the bolt 250 is screwed into the second threaded hole, the end of the shaft of the bolt 250 locates inside of the elongate recess 221. The bolt 250 limits the amount of sliding movement of the fence plate 214 on the fence base 202, the distance being limited to amount the shaft of the bolt 250 can slide along the recess 221. The head of the bolt 250 is located behind the vertical flat support surface 204 of the fence base 202 so that it does not interfere with the operation of the vertical flat support surface 204.
It will be appreciated that the bolt 250 can be omitted from the fence base 202. This would allow the fence plate 214 to slide an unrestricted distance on the fence base 202.

Pivotally mounted on the end of the upper wall section 216 of the fence plate 214 which is remote from the blade 128 is a flip down stop 252. The flip down stop 252 is attached using a bolt 254 which screws into a threaded hole from in the end of the upper wall section 216. The flip down stop 252 comprises a first section 256 which extends radially away from the axis of pivot and a second section 258 which connects to the end of the first section remote from the axis of pivot at an oblique angle to that of the first section 256.

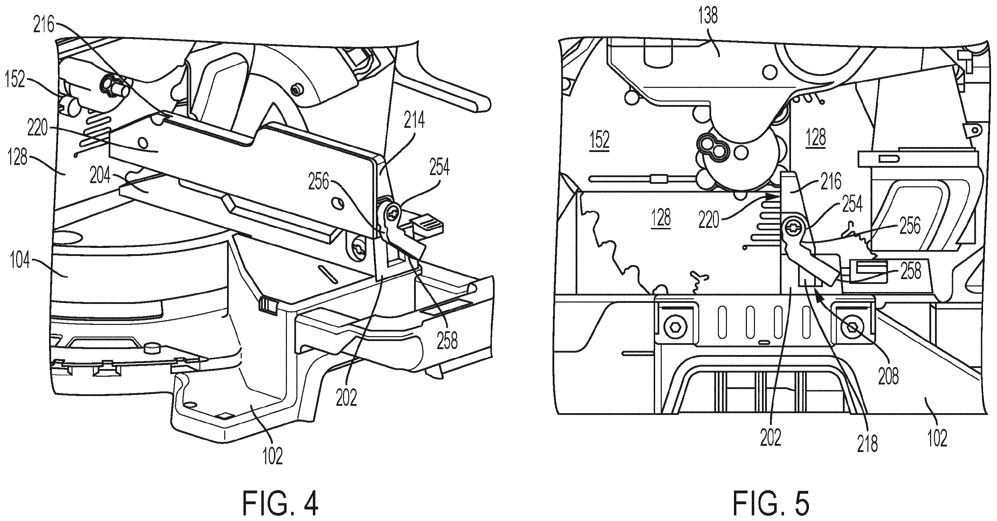

The flip down stop 252 can pivot about a horizontal axis 260 which extends in a direction to the longitudinal axis of the groove 206 between two positions, a first position indicated in figure 3 where the second section 258 is located in front of the flat support surface 220 of the upper wall section (see also Figures 2, 6 and 7) and a second position indicated in figures 4 and 5 where the whole of the flip down stop 252 is located behind the flat support surface 220 of the upper wall section 216. The flip down stop 252 can pivot through an angle 240 degrees between its two positions.

When the flip down stop 252 is in its first position, the first section 256 extends downwardly and forward at an angle from the pivot point to a position forward of the flat support surface 220 of the upper wall section 216. The second section 258 is located forward of the flat support surface 220 of the upper wall section 216 and extends vertically downwardly from the end of the first section 256. The lower end of the second section 258 locates below the lower groove engagement section 218 of the fence plate 214. In the first position, the side wall 262 of the stop 252 is located perpendicular to the plane of the support surface 220. The side wall 262 of the moveable stop is also located adjacent the outer edge of the support surface which is remote from the cutting blade.

When the flip down stop 252 is in its second position, the first section 256 extends vertically downwardly from the pivot axis 260. The second section 258 extends downwardly and rearwardly at an angle from the vertical to a position behind the flat support surface 220 of the upper wall section 216. The lower end of the second section locates at the same height as the lower surface of the lower groove engagement section 218 of the fence plate 214.

The flip down stop 254 pivots from its first position to its second position in the direction of Arrow Q and from its second position to its first position in the direction of Arrow R. The amount of pivotal movement of the flip down stop 252 is limited by a stop formed on the end of the upper wall section 216. Friction between the flip down stop 252 and the fence plate 214 holds the flip down stop 252 in its first and second positions against the stop. Friction can also hold the flip down stop 252 in any angular position between the first and second position.

The flip down stop 252 can be used to cut workpieces to a pre-set length.

When the flip down stop 252 is in its second position, it is located behind the flat support surface 220 of the fence plate 214. Therefore, it is unable to come into contact with a workpiece 270. The saw can then be used in the normal manner. However, when the flip down stop 252 is moved to its first position, it can be used to align the position of a workpiece 270 relative to the saw blade in order for it to be cut to a pre-set length.

When the lower groove engagement section 218 locates within the groove 206 of the fence base 202, the fence plate's position can be locked relative to the fence base 202 by screwing the lock knob 300 so that the end of the shaft 304 engages with the rear side of the lower groove engagement section 218 and presses it against the front wall 214 of the groove 206. The lower groove engagement section 218 then held stationary within the groove 206 of the fence base 202 due to friction. The fence plates's position can be changed by unscrewing the lock knob 300 so the end of the shaft disengages from the lower groove engagement section 218. The fence plate can then be slid along the groove 206 to a desired position.

In order to use the flip down stop 252 to cut workpieces at a pre-set length, the flip down stop 252 is pivoted to its first position. The lock knob 300 is unscrewed so that the end of the shaft 304 disengages from the lower groove engagement section 218 to allow the fence plate 214 to be slid within the groove 206 on the fence base 202. The fence plate 214 is then slid within the groove 206 until the inner side wall 262 of the flip down stop 252 is located at a desired distance T from the cutting blade 128. The position at distance T can be determined using a ruler. The lock knob 300 is then screwed into the threaded hole 210 until the end of the shaft 304 engages with the rear side of the lower groove engagement section 218 and presses it against the front wall 213 of the groove 206 to frictionally lock it to the fence base 202. The workpiece 270 is then place on the base 102 of the saw with its side abutting the two support surfaces 204, 220 of the fence 214 and its end 264 abutting the inner side wall 262 of the flip down stop 252. The work piece 270 is then cut with the blade 128 whilst being held in this position. The workpiece 270 is then cut to a length of T. The cut workpiece 270 is then removed and another workpiece 270 placed in the same position in order for it be cut to a length T. This process can be repeated as many times as necessary.

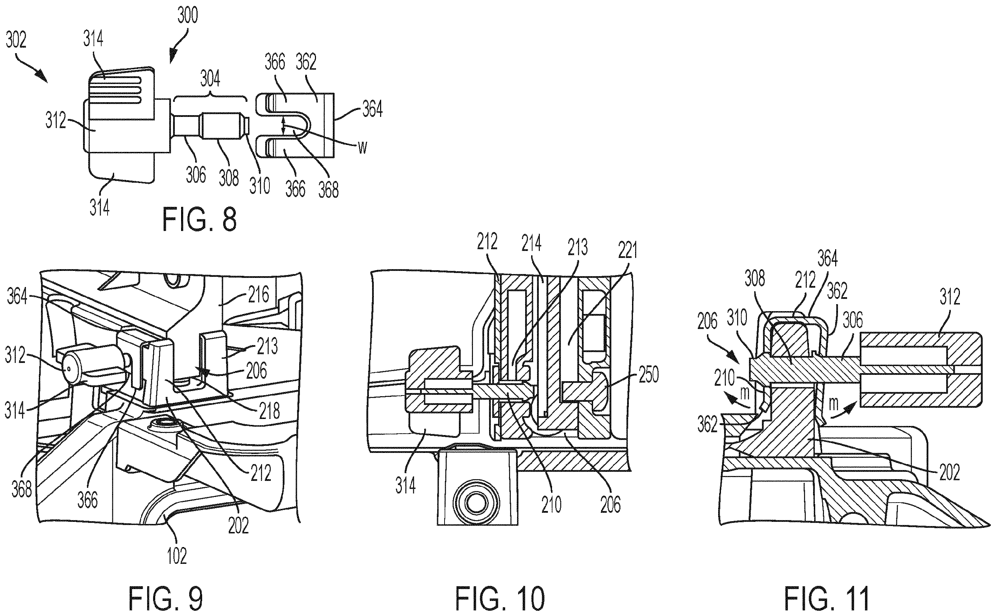

The design of the lock knob 300 will now be described with reference to Figures 8 to 11.

The lock knob 300 comprises a hand grip 302 connected to a metal shaft 304. The shaft comprises there sections; a first section 306 which is circular in cross section with a pre-set diameter D1, a second section 308 which is circular in cross section with a second pre-set diameter D2, which is greater than D1, and a third end section 310 with the same diameter, D1 as the first section 306.The second section 308 is threaded and can be screwed into the threaded hole 210. The length of the second section is is substantially less than the length of the threaded hole 210. The hand grip 302 comprises a central section 312 which surrounds the end of the first section 306 of the shaft 304 which is remote from the second section 308, and two wings 314 which project radially from the central section 312 in opposite directions. An operator presses the wings 314 with his fingers in order to rotate the lock knob 300.

In use, the shaft of the lock knob 300 is inserted into the threaded hole 210 until the thread of the second section 308 engages with the thread of the hole 210. The knob 300 is then rotated to screw the second section 308 into the threaded hole 210. The shaft 304 can be screwed between a first position where the end section 310 has passed through the threaded hole 210 and extends into the groove 206 and a second position where the end section 310 is located within the threaded hole 210. When the shaft 210 is in its second position, the lower groove engagement section 218 can placed in the groove 206. The shaft 304 can then be screwed to its second position so that the end section 310 enters the groove 206. The shaft 304 can be rotated until end of the end section 310 engages with the side of the groove engagement section 218 of the fence plate 214. When the end is engaged with the lower groove engagement section 218, the lower groove engagement section 218 is locked into the groove 206 of the fence base 202 and is prevented from moving relative to the fence base 202.

The shaft 304 of the lock knob 300 is locked into the threaded hole 210 by a clip 360. The clip 360 prevents the shaft 304 from being removed from the threaded hole 210.
The clip 360 comprises two approximately parallel side sections 362 which are connected to the other end at one end by a central bridging section 364 which extends perpendicularly to the side sections 362 and. The clip 360 is formed from resilient deformable metal so that the free ends of the side sections 362 can be bent away from each other in the direction of Arrow M when a force is applied but will return to their original shape and position when the force is removed due to the resilient nature of the clip 360. Each side section 362 comprises two legs 366 which are separated by a gap 368 having width W along its length. The size of the width W is greater than the diameter D1 of the first section 306 of the shaft 304 of the lock knob 300 but less than the diameter D2 of the second section 308 of the lock knob 300. The width of the central section 364 is approximately the same as that of the rear wall 212 of the fence base 202 which forms the rear side wall 212 of the groove 206.

When the second section 308 of the shaft of the lock knob is fully located inside of the threaded hole 210, the clip is slid over the rear wall 212 so that one side section 362 slides down one side of the rear wall 212, whilst the other side section slides down the opposite side of the rear wall 212 with the central bridging section 364 locating against the top surface of the rear wall 212. The resilient nature of clip 360 results in the inner sides of the side sections 362 pressing against the sides of the rear wall 212 to frictionally hold the clip 360 in place. When the clip 360 is slid into position, the first section 306 of the shaft 304 of the lock knob locates in and passes through the gap 368 between the legs 366 of one side section 362 of the clip 360 whilst the third end section 310 of the shaft 304 of the lock knob 300 locates in and passes through the gap 368 between the legs 366 of the other side section 362 of the clip 360. This results in the second section 308 of the shaft 304 of the lock knob 300 being located between the two side sections362 of the clip 360. As the diameter D2 of the section section 308 of the shaft 304 is greater than the width W of the gap 368, it is unable to pass through the gap and therefore is prevented from exiting the threaded hole 210 by the clip 360. As such the lock knob 300 is retained in the hole 210 whilst the clip 360 remains in place. The thickness of the side section 362 of the clip is sufficiently thin so as not to interfere with the sliding operation of the lower groove engagement section 218 in the groove 206.

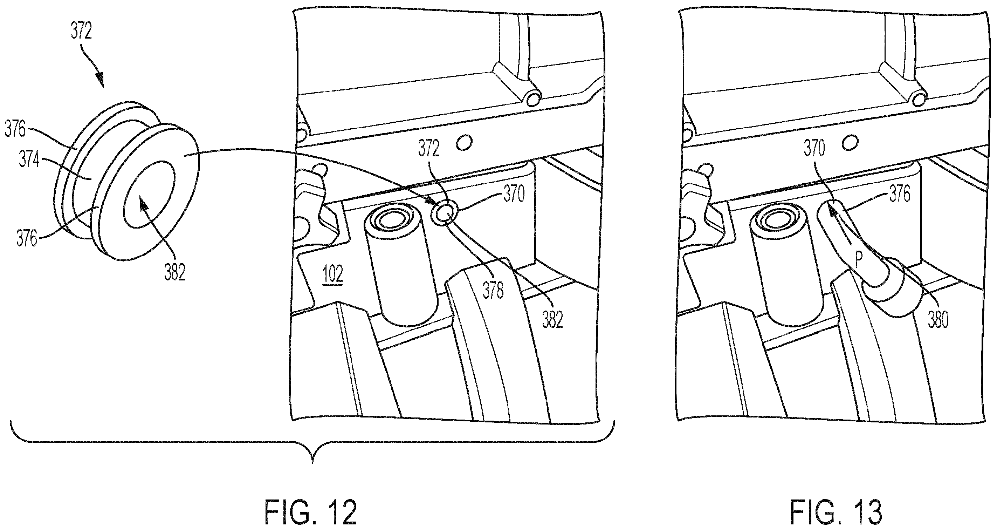

A tool holder will now be described with reference to Figures 12 and 13.

A wall 370 forms part of the base 102 of the saw which is made from sheet metal. A hole 378 is formed through wall 370. A rubber gromet 372 comprises a central tubular section 374 with radial flanges 376 formed at each end. A passage 382 extends through the length of the gromet 372. The rubber gromet 372 is formed in a one-piece construction. The gromet 372 is located in the hole 378 so that one radial flange 376 locates on one side of the wall 370 and surrounds one entry into the hole 378 whilst the other radial flange 376 locates on the other side of the wall 370 and surrounds the other entry into the hole 378 with the tubular section 374 locating inside of the hole 378. The shaft 380 of a tool can then be pushed in the direction of Arrow P into the passage 382 in the gromet to hold the tool on the base 102.

## Claims

1. A saw comprising:
a base assembly (102, 104);
a saw assembly (138) pivotally mounted on the base assembly (102, 104) which is capable of pivoting towards or away from the base assembly (102, 104) to a cut a work piece (270) located on the base assembly (102, 104);
a fence assembly (114) which extends across at least part of the base assembly (102, 104);
wherein the fence assembly (114) comprises:
a fence base (202);
a fence plate (214) slidingly mounted on the fence base (202) and which is capable of sliding towards or away from the saw assembly (138) when the saw assembly (138) is in its lowest position, the fence plate (214) further comprising a support surface (220) against which a workpiece (270) can be placed when being cut;
wherein it further comprises provided a moveable stop (252) mounted on the fence plate (214) which is capable of being moved between two positions, a first position where at least part of the moveable stop (252) locates forward of the support surface (220) and a second position where the moveable stop (252) locates behind the support surface (220);
wherein the moveable stop (252) pivots between its two positions;
**characterised in that** the moveable stop (252) is mounted on the end of the fence plate (214) which is remote from the saw assembly (138) when it is in its lowest position;
wherein the moveable stop (252) pivots about an axis (260) which extends in a direction parallel to a longitudinal axis of a groove (206) formed in the fence base (202) in which the fence plate (214) is mounted in and capable of being slid along;
wherein the moveable stop (252) comprises a first section (256) which extends radially away from the axis (260) of pivot and a second section (258) which connects to the end of the first section (256) remote from the axis (260) of pivot at an oblique angle to that of the first section (254);
wherein, when the moveable stop (252) is in its first position, the first section (256) extends downwardly and forward at an angle from the pivot point to a position forward of the support surface (220); and
the second section (258) is located forward of the support surface (220) and extends vertically downwardly from the end of the first section (256);
wherein, in its first position, a side wall (262) of the moveable stop (252) is located adjacent the outer edge of the support surface (220); and
wherein, when the moveable stop (252) is in its second position, the first section (256) is located behind the surface (220) and extends vertically downwardly from the pivot axis (260); and
the second section (258) extends from the first section downwardly and rearwardly,
away from the support surface (220), at an angle from the vertical to a position behind the flat support surface (220) of the fence plate (214).

2. A saw as claimed in claim 1 wherein the side wall (262) of the moveable stop (252) is located perpendicular to the plane of the support surface (220).

3. A saw as claimed in any one of the previous claims wherein, when the moveable stop (252) is located in its first position, a work piece is capable of being located on the base assembly (102, 104) so that it abuts against the support surface (220) and the moveable stop (252).

4. A method of using a saw as claimed in an one of claims 1 to 3 comprising the steps of:
placing the moveable stop (252) in its first position;
sliding the fence plate (214) on the fence base (202) to a predetermined position from the motor assembly (138);
placing a work piece on the base assembly (102, 104) so that it abuts against both the support surface (220) and the moveable stop (252);
pivoting the saw assembly (138) to cut the work piece.

5. A method as claimed in claim 4 wherein the method comprises the further step of placing the work piece on the base (102, 104) so that it abuts against an inner side wall the moveable stop (252).

## Patentansprüche

1. Säge, umfassend:
eine Basisanordnung (102, 104);
eine Sägeanordnung (138), die schwenkbar an der Basisanordnung (102, 104) montiert ist und die in der Lage ist, in Richtung der Basisanordnung (102, 104) oder von dieser weg zu schwenken, um ein auf der Basisanordnung (102, 104) befindliches Werkstück (270) zu schneiden;
eine Anschlaganordnung (114), die sich über zumindest einen Teil der Basisanordnung (102, 104) erstreckt;
wobei die Anschlaganordnung (114) Folgendes umfasst:
eine Anschlagbasis (202);
eine Anschlagplatte (214), die verschiebbar auf der Anschlagbasis (202) montiert ist und die in der Lage ist, in Richtung der Sägeanordnung (138) oder von dieser weg verschoben zu werden, wenn sich die Sägeanordnung (138) in ihrer untersten Position befindet, wobei die Anschlagplatte (214) weiter eine Auflagefläche (220) umfasst, gegen die ein Werkstück (270) beim Schneiden anliegen kann;
wobei sie weiter einen bereitgestellten beweglichen Anschlag (252) umfasst, der an der Anschlagplatte (214) montiert ist und der in der Lage ist, zwischen zwei Positionen bewegt zu werden, einer ersten Position, in der sich zumindest ein Teil des beweglichen Anschlags (252) vor der Auflagefläche (220) befindet, und einer zweiten Position, in der sich der bewegliche Anschlag (252) hinter der Auflagefläche (220) befindet;
wobei der bewegliche Anschlag (252) zwischen seinen beiden Positionen schwenkt;
**dadurch gekennzeichnet, dass** der bewegliche Anschlag (252) an dem Ende der Anschlagplatte (214) montiert ist, das von der Sägeanordnung (138) entfernt ist, wenn sich diese in ihrer untersten Position befindet;
wobei der bewegliche Anschlag (252) um eine Achse (260) schwenkt, die sich in einer Richtung parallel zu einer Längsachse einer in der Anschlagbasis (202) ausgebildeten Nut (206) erstreckt, in der die Anschlagplatte (214) montiert ist und entlang der sie verschoben werden kann;
wobei der bewegliche Anschlag (252) einen ersten Abschnitt (256) umfasst, der sich radial von der Schwenkachse (260) weg erstreckt, und einen zweiten Abschnitt (258), der mit dem von der Schwenkachse (260) entfernten Ende des ersten Abschnitts (256) in einem schrägen Winkel zu dem des ersten Abschnitts (254) verbunden ist;
wobei, wenn sich der bewegliche Anschlag (252) in seiner ersten Position befindet, der erste Abschnitt (256) sich nach unten und nach vorne in einem Winkel vom Drehpunkt zu einer Position vor der Auflagefläche (220) erstreckt; und
der zweite Abschnitt (258) sich vor der Auflagefläche (220) befindet und sich vom Ende des ersten Abschnitts (256) vertikal nach unten erstreckt;
wobei, in ihrer ersten Position, eine Seitenwand (262) des beweglichen Anschlags (252) sich neben der Außenkante der Auflagefläche (220) befindet; und
wobei, wenn sich der bewegliche Anschlag (252) in seiner zweiten Position befindet, sich der erste Abschnitt (256) hinter der Oberfläche (220) befindet und sich von der Schwenkachse (260) vertikal nach unten erstreckt; und
der zweite Abschnitt (258) sich vom ersten Abschnitt nach unten und nach hinten, weg von der Auflagefläche (220), in einem Winkel von der Vertikalen zu einer Position hinter der flachen Auflagefläche (220) der Anschlagplatte (214) erstreckt.

2. Säge nach Anspruch 1, wobei die Seitenwand (262) des beweglichen Anschlags (252) sich senkrecht zur Ebene der Auflagefläche (220) befindet.

3. Säge nach einem der vorstehenden Ansprüche, wobei, wenn sich der bewegliche Anschlag (252) in seiner ersten Position befindet, ein Werkstück so auf der Basisanordnung (102, 104) angeordnet werden kann, dass es gegen die Auflagefläche (220) und dem beweglichen Anschlag (252) anliegt.

4. Verfahren zur Verwendung einer Säge nach einem der Ansprüche 1 bis 3, umfassend die Schritte des:
Platzierens des beweglichen Anschlags (252) in seiner ersten Position;
Verschiebens der Anschlagplatte (214) auf der Anschlagbasis (202) von der Motoranordnung (138) in eine vorbestimmte Position;
Platzierens eines Werkstücks auf der Basisanordnung (102, 104), so dass es sowohl an der Auflagefläche (220) als auch gegen den beweglichen Anschlag (252) anliegt;
Schwenkens der Sägeanordnung (138), um das Werkstück zu schneiden.

5. Verfahren nach Anspruch 4, wobei das Verfahren den weiteren Schritt des Platzierens des Werkstücks auf der Basis (102, 104) umfasst, so dass es gegen eine innere Seitenwand des beweglichen Anschlags (252) anliegt.

## Revendications

1. Scie comprenant :
un ensemble base (102, 104) ;
un ensemble scie (138) monté de manière pivotante sur l'ensemble base (102, 104) qui est apte à pivoter vers ou loin de l'ensemble base (102, 104) pour couper une pièce à usiner (270) située sur l'ensemble base (102, 104) ;
un ensemble guide (114) qui s'étend sur au moins une partie de l'ensemble base (102, 104) ;
dans laquelle l'ensemble guide (114) comprend :
une base de guide (202) ;
une plaque de guide (214) montée coulissante sur la base de guide (202) et qui est apte à coulisser vers ou loin de l'ensemble scie (138) lorsque l'ensemble scie (138) est dans sa position la plus basse, la plaque de guide (214) comprenant en outre une surface de support (220) contre laquelle une pièce à usiner (270) peut être placée lors de la coupe ;
dans laquelle elle comprend en outre une butée mobile (252) montée sur la plaque de guide (214) qui est apte à être déplacée entre deux positions, une première position où au moins une partie de la butée mobile (252) se situe en avant de la surface de support (220) et une seconde position où la butée mobile (252) se situe derrière la surface de support (220) ;
dans laquelle la butée mobile (252) pivote entre ses deux positions ;
**caractérisée en ce que** la butée mobile (252) est montée sur l'extrémité de la plaque de guide (214) qui est éloignée de l'ensemble scie (138) lorsqu'elle est dans sa position la plus basse ;
dans laquelle la butée mobile (252) pivote autour d'un axe (260) qui s'étend dans une direction parallèle à un axe longitudinal d'une rainure (206) formée dans la base de guide (202) dans laquelle la plaque de guide (214) est montée et le long de laquelle elle peut être glissée ;
dans laquelle la butée mobile (252) comprend une première section (256) qui s'étend radialement loin de l'axe (260) de pivotement et une seconde section (258) qui se lie à l'extrémité de la première section (256) éloignée de l'axe (260) de pivotement selon un angle oblique par rapport à celui de la première section (254) ;
dans laquelle, lorsque la butée mobile (252) est dans sa première position, la première section (256) s'étend vers le bas et vers l'avant selon un angle allant du point pivot à une position en avant de la surface de support (220) ; et
la seconde section (258) est située en avant de la surface de support (220) et s'étend verticalement vers le bas à partir de l'extrémité de la première section (256) ;
dans laquelle, dans sa première position, une paroi latérale (262) de la butée mobile (252) est située de manière adjacente au bord extérieur de la surface de support (220) ; et
dans laquelle, lorsque la butée mobile (252) est dans sa seconde position, la première section (256) est située derrière la surface (220) et s'étend verticalement vers le bas à partir de l'axe pivot (260) ; et
la seconde section (258) s'étend de la première section vers le bas et vers l'arrière, loin de la surface de support (220), selon un angle par rapport à la verticale, à une position derrière la surface de support plate (220) de la plaque de guide (214).

2. Scie selon la revendication 1, dans laquelle la paroi latérale (262) de la butée mobile (252) est située perpendiculairement au plan de la surface de support (220).

3. Scie selon l'une quelconque des revendications précédentes, dans laquelle, lorsque la butée mobile (252) est située dans sa première position, une pièce à usiner est apte à être située sur l'ensemble base (102, 104) de sorte qu'elle bute contre la surface de support (220) et la butée mobile (252).

4. Procédé d'utilisation d'une scie selon l'une des revendications 1 à 3, comprenant les étapes de :
placement de la butée mobile (252) dans sa première position ;
glissement de la plaque de guide (214) sur la base de guide (202) jusqu'à une position prédéterminée à partir de l'ensemble moteur (138) ;
placement d'une pièce à usiner sur l'ensemble base (102, 104) de manière à ce qu'elle bute à la fois contre la surface de support (220) et la butée mobile (252) ;
pivotement de l'ensemble scie (138) pour couper la pièce à usiner.

5. Procédé selon la revendication 4, dans lequel le procédé comprend l'étape supplémentaire de placement de la pièce à usiner sur la base (102, 104) de sorte qu'elle bute contre une paroi latérale intérieure de la butée mobile (252).
